# EUROPEAN PATENT APPLICATION

(11) **EP 2 819 153 A2**
(43) Date of publication of application: **31.12.2014**
(21) Application number: 13195455.4
(22) Date of filing: 03.12.2013
(51) Int. Cl.: H01L 21/56, G06F 21/32, G06K 9/00, G06F 1/16

(54) **Method of manufacturing fingerprint recognition home key having offset structure of decorative part and structure of fingerprint recognition home key**

(30) Priority: 26.06.2013 KR 20130073560
(71) Applicant: Dreamtech Co., Ltd, Gyeonggi-do 463-824 (KR)
(72) Inventor: Lee, Ho-Jun, 331-220 Chungcheongnam-do (KR); Kim Young-Ho, 448-505 Gyeonggi-do (KR)
(74) Representative: Finnie, Peter John

(57) **Abstract**

Disclosed is a method of manufacturing a fingerprint recognition home key having an offset structure of a decorative part. The method includes: (a) preparing an injection molded product having a shape of a home key and provided with a fingerprint recognition sensor, (b) applying a bonding material or an adhesive to an upper side of a film of the fingerprint recognition sensor, (c) bonding an external member to the upper side of the film of the fingerprint recognition sensor to which the bonding material or the adhesive is applied, and (d) assembling the decorative part to have a height difference from the external member.

## Description

### BACKGROUND

### 1. Technical Field

Embodiments of the invention relate to a method of manufacturing a fingerprint recognition home key having an offset structure of a decorative part and a structure of the fingerprint recognition home key.

### 2. Description of the Related Art

Generally, fingerprint recognition technology is used to prevent various security incidents through user registration and authentication procedures. For example, fingerprint recognition technology is utilized for defense of personal and group networks, protection of various content and data, access control, and the like.

With recent increase of various portable devices including smartphones, tablet personal computers (PCs), and the like, unintentional leakage of private data stored in the portable devices frequently occurs.

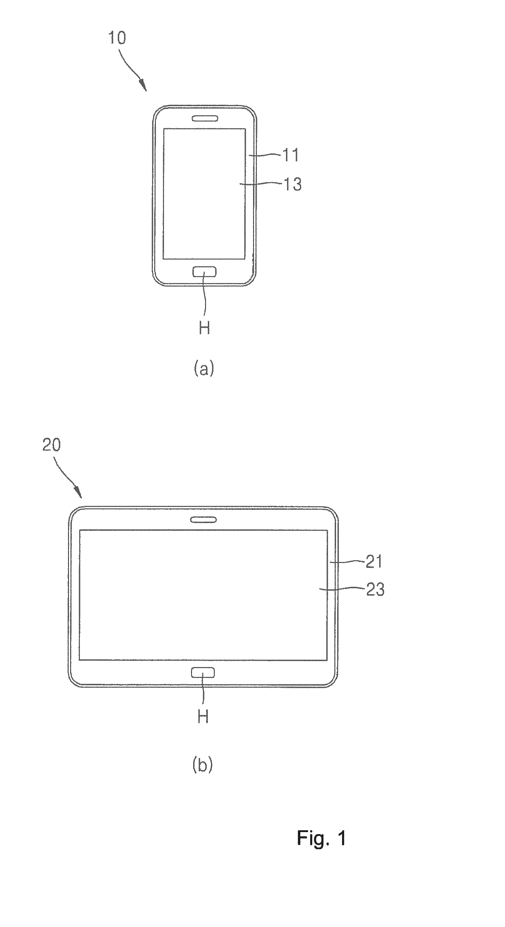

Fig. 1 shows two examples of a general portable device.

In Fig. 1, (a) shows a smartphone, and (b) shows a tablet PC.

Referring to (a) and (b) of Fig. 1, a smartphone 10 or a tablet PC 20 includes a main body 11, 21, a display device 13, 23 placed on a front side of each main body, and a home key H provided to one side of each display device.

The home key H is provided to perform a preset operation of the smartphone or the tablet PC. When the home key H is pressed or touched during use of the portable device, a convenient function such as return to an initial screen is provided.

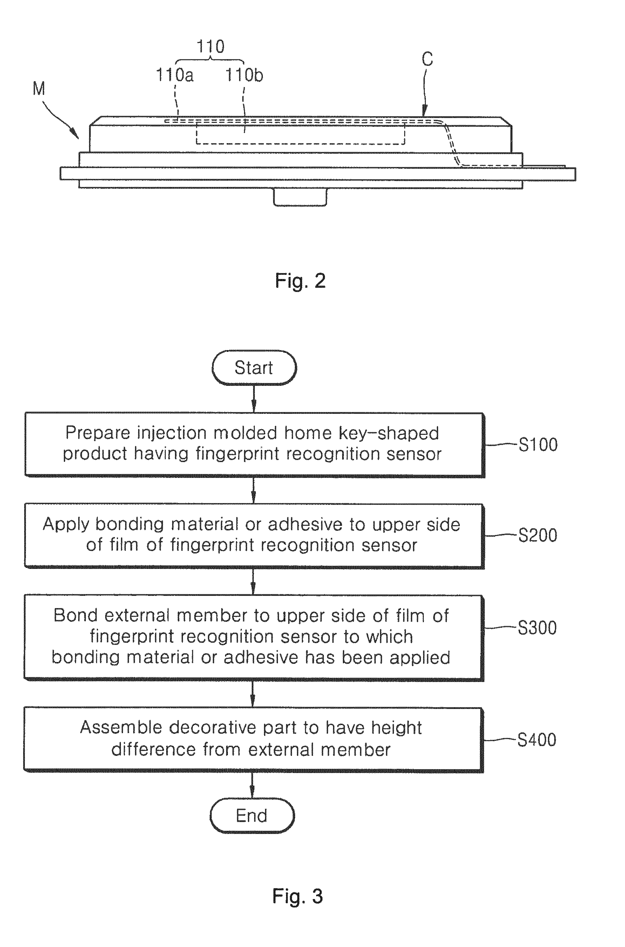

Electrostatic fingerprint recognition technology is based on electrical conductivity of the skin, and reads out inherent fingerprint patterns of users as an electric signal. A structure of a home key receiving an electrostatic fingerprint recognition sensor is shown in Fig. 2.

Fig. 2 is a sectional view of a fingerprint recognition home key. The fingerprint recognition sensor is received under a top surface of a product M provided in the form of the home key by injection molding and the like.

The fingerprint recognition sensor includes an application specific integrated circuit (ASIC) 110a and a flexible printed circuit board (FPCB) film 110b, in which the ASIC 110a serves to convert detected analog data into a digital signal and is electrically connected to the FPCB film 110b formed with a pattern for recognizing a fingerprint.

Further, a coating C having a predetermined thickness is composed of a bottom coat, a middle coat, and a top coat. The bottom coat is formed by depositing a primer and forming a shielding layer on the top surface of the product, the middle coat is formed on the bottom coat by painting or the like, and the top coat is formed on the middle coat by urethane coating or ultraviolet (UV) deposition.

Here, if the thickness of the coating C exceeds a reference thickness, the fingerprint recognition rate can be lowered.

In addition, many coating processes are required as mentioned above, thereby causing increase in process time in manufacture of the fingerprint recognition home key.

The most important goal in designing the fingerprint recognition home key is to maximize a fingerprint recognition rate. Accordingly, there is a need for a fingerprint recognition home key having an enhanced structure for improved fingerprint recognition rate.

In the related art, Korean Patent Publication No. 2002-0016671A (published on March 6, 2002) discloses a portable information terminal having a built-in fingerprint recognition module and a control method thereof.

### BRIEF SUMMARY

It is one aspect of the present invention to provide a method of manufacturing a fingerprint recognition home key having an offset structure of a decorative part and a structure of the fingerprint recognition home key, in which the decorative part to be assembled to an exterior surface of the fingerprint recognition home key is formed in a offset structure with respect to a fingerprint touch portion.

Problems to be solved by the present invention are not limited to the foregoing problem, and other problems not mentioned herein will be clearly understood by those skilled in the art from the following description.

In accordance with one aspect of the present invention, a method of manufacturing a fingerprint recognition home key having an offset structure of a decorative part include: (a) preparing an injection molded product having a shape of a home key and provided with a fingerprint recognition sensor; (b) applying a bonding material or an adhesive to an upper side of a film of the fingerprint recognition sensor; (c) bonding an external member to the upper side of the film of the fingerprint recognition sensor to which the bonding material or the adhesive is applied; and (d) assembling the decorative part to have a height difference from the external member.

The height difference between the external member and the decorative part may range from 30 µm to 150 µm.

The applying a bonding material or an adhesive may include may include applying the bonding material or the adhesive to the upper side of the film of the fingerprint recognition sensor, or attaching a double-sided tape thereto.

The external member may be formed of general glass or tempered glass.

The external member may be formed of general glass or tempered glass having a thickness of 40 µm to 100 µm.

The external member may be formed of sapphire glass.

The external member may be formed of sapphire glass having a thickness of 70 µm to 140 µm.

The external member may be formed of a plastic film or an injection molded thin film.

The external member may be formed of a plastic film or an injection molded thin film having a thickness of 30 µm to 130 µm.

The bonding an external member to the upper side of the film of the fingerprint recognition sensor may include: (c-1) preparing the external member; and (c-2) printing a selected color at least once on a deposited portion of the rear side of the external member before bonding the external member to the upper side of the film of the fingerprint recognition sensor.

The selected color may be printed at least once on the deposited portion of the rear side of the external member, and the deposition and color print layer may have a thickness of 2 µm to 30 µm.

In accordance with another aspect of the present invention, there is provided a structure of a fingerprint recognition home key, wherein a decorative part is assembled along an edge of an external member placed on an upper side of a film of a fingerprint recognition sensor to protrude upward within a height difference range of 30 µm to 150 µm from the external member.

### BRIEF DESCRIPTION OF THE DRAWINGS

The above and other aspects, features and advantages of the present invention will become apparent from the following description of exemplary embodiments given in conjunction with the accompanying drawings, in which:
Fig. 1 schematically shows a mobile phone and a tablet PC as examples of a general portable device;
Fig. 2 schematically shows an internal structure of a fingerprint recognition home key;
Fig. 3 is a flowchart of a method of manufacturing a fingerprint recognition home key having an offset structure of a decorative part according to one embodiment of the present invention;
Fig. 4 is a process diagram of the method of manufacturing a fingerprint recognition home key having an offset structure of a decorative part according to the embodiment of the present invention;
Fig. 5 is a plan view of the decorative part in the structure of the fingerprint recognition home key according to the embodiment of the present invention;
Figs. 6 and 7 are an exploded perspective view and an assembled perspective view, showing that the decorative part is assembled to have a height difference from an external member, in the structure of the fingerprint recognition home key according to the embodiment of the present invention; and
Fig. 8 shows a table of test results for comparing fingerprint recognition rates depending on a height difference between a decorative part and an external member.

### DETAILED DESCRIPTION

Terms used in the following description and claims should be interpreted as having a meaning that is consistent with their meaning in the context of the specification and relevant art and should not be interpreted in an idealized or overly formal sense as defined in commonly used dictionaries. In addition, the disclosure in the specification and the configurations shown in the drawings are just preferred embodiments of the present invention and do not cover all the technical idea of the present invention. Thus, it should be understood that such embodiments may be replaced by various equivalents and modifications at the time point when the present application is filed.

Hereinafter, a method of manufacturing a fingerprint recognition home key having an offset structure of a decorative part and a structure of the fingerprint recognition home key according to exemplary embodiments of the invention will be described with reference to the accompanying drawings.

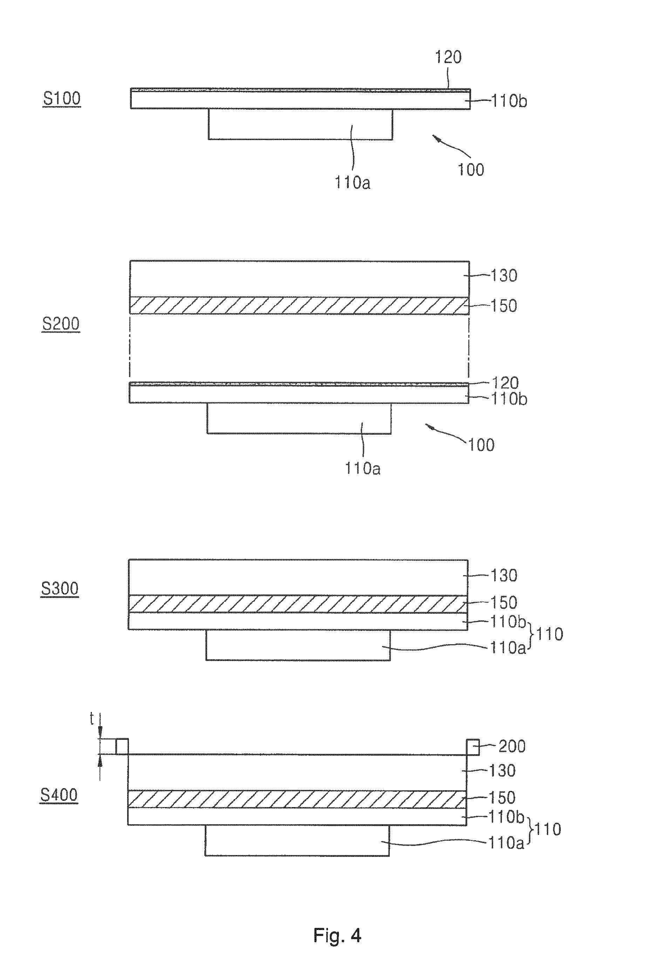

Fig. 3 is a flowchart of a method of manufacturing a fingerprint recognition home key having an offset structure of a decorative part according to one embodiment of the present invention, and Fig. 4 is a process diagram thereof.

As shown therein, the method of manufacturing the fingerprint recognition home key having an offset structure of a decorative part (hereinafter, referred to as the "method of manufacturing a fingerprint recognition home key") is achieved by preparing a fingerprint recognition sensor (S100), applying a bonding material or an adhesive (S200), bonding the external member (S300), and assembling the decorative part to have a height difference from the external member (S400).

Below, detailed operations will be described with reference to Figs. 3 and 4.

### Preparation of fingerprint recognition sensor (S 100)

In this operation, a fingerprint recognition sensor is prepared. More specifically, a home key-shaped product, which can be received inside a portable device by injection molding and the like, is prepared using an electrostatic fingerprint recognition sensor.

Referring to S100 of Fig. 4, a schematic sectional structure of the fingerprint recognition sensor 110 is shown.

Although the shapes of the product molded in the form of a home key by injection molding and the like (that is, an injection molded product) are not separately shown, the product may have various shapes. Further, the fingerprint recognition sensor 110 is placed on the top of the product molded in the form of a home key.

The fingerprint recognition sensor 110 includes an ASIC 110a and an FPCB film 110b (hereinafter, referred to as the "film of the fingerprint recognition sensor").

The ASIC 110a serves to convert detected analog data into a digital signal and is electrically connected to the film 110b of the fingerprint recognition sensor 110 having a pattern for recognizing a fingerprint.

The film 110b of the fingerprint recognition sensor 110 refers to an FPCB formed of a polyimide (PI) film.

For instance, the fingerprint recognition sensor 110 may have a thickness of about 25 µm.

The fingerprint recognition sensor 110 is of an electrostatic type, which uses electrical conductivity of the skin to read out inherent fingerprint patterns of users as an electric signal.

### Application of bonding material or adhesive (S200)

In this operation, a bonding material or an adhesive is applied to the film. That is, the bonding material or the adhesive is applied to an upper side of the film of the fingerprint recognition sensor prepared in S100.

Referring to S200 of Fig. 4, it can be seen that the bonding material or the adhesive 120 is applied to the upper side of the film of the fingerprint recognition sensor.

Here, the bonding material or the adhesive 120 may include well-known adhesives or bonding materials such as glues. Alternatively, a double-sided tape having a bonding or adhesive function may be used.

The double-sided tape may be attached to the upper side of the film 110b of the fingerprint recognition sensor.

In particular, when applying the bonding material or the adhesive, a metering dispenser may be used.

### Bonding of external member (S300)

In this operation, an external member is bonded to the upper side of the film of the fingerprint recognition sensor to which the bonding material or the adhesive has been applied in S200.

Referring to Fig. 4, the external member 130 is bonded to the upper side of the film 110b of the fingerprint recognition sensor to which the bonding material or the adhesive 120 has been applied.

In this operation, the external member 130 may include various materials having a high dielectric constant.

Specifically, three kinds of materials may be employed for the external member 130.

In one embodiment, general glass or tempered glass may be used.

When general glass or tempered glass having a high dielectric constant is used as the external member, the external member may have a thickness of 40 µm to 100 µm.

If the thickness of the external member is less than 40 µm, the external member is excessively thin and can thus be easily damaged or broken when touched by a finger.

On the other hand, if the thickness of the external member exceeds 100 µm, the fingerprint recognition rate can be lowered due to increase in distance between a finger and the sensor.

In another embodiment, sapphire glass may be used.

When sapphire glass having a higher dielectric constant than general glass or tempered glass is used as the external member, the external member may have a thickness of 70 µm to 140 µm.

In this case, if the thickness of the external member is less than 70 µm, the external member is excessively thin and thus can be easily damaged or broken.

If the thickness of the external member exceeds 140 µm, the fingerprint recognition rate can be lowered even though the dielectric constant of sapphire glass is higher than that of general glass or tempered glass.

In a further embodiment, a plastic film or an injection molded thin film may be used.

When the plastic film or injection molded thin film is used as the external member, the external member may have a thickness of 30 µm to 130 µm.

In this case, if the thickness of the external member is less than 30 µm, the external member is excessively thin and thus can be easily damaged or broken. On the other hand, if the thickness of the external member exceeds 130 µm, the fingerprint recognition rate can be lowered.

As such, when using the three kinds of materials such as general glass or tempered glass, sapphire glass, a plastic film or an injection molded thin film as the external member 130, the upper thickness limit of each material is selected to secure a fingerprint recognition rate of 90% or more upon testing several times under the same conditions using the same fingerprint recognition sensor.

Further, the external member may have any one shape selected from among a first shape that is generally flat, a second shape that protrudes upward, and a third shape that is recessed downward.

An existing coating method cannot provide the second shape that protrudes upward, and the third shape that is recessed downward. However, according to embodiments of the invention, various materials such as glass and the like are used as the external member, thereby providing various pleasant outer appearances.

For example, the external member may be designed to have a variety of curved shapes, thereby achieving various designs of the home key.

The external member is bonded to the upper side of the film of the fingerprint recognition sensor through the operation of bonding the external member (S300), and therefore deposition, color printing or the like operation may be performed on the rear side of the external member.

Deposition on the rear side of the external member is performed to facilitate color printing. After deposition on the rear side of the external member, color printing is performed by selecting a color matching a color of a portable device according to operator selection or consumer demand.

For example, a printed layer having a black or white color may be formed.

In addition, color printing may be performed at least once. That is, color printing may be performed once or more as necessary.

Here, the deposition and color print layer 150 on the rear of the external member 130 may have a thickness of 2 µm to 30 µm.

When the deposition and color print layer 150 is formed on the rear side of the external member 130, the external member is firmly bonded to the film 110b of the fingerprint recognition sensor via the bonding material or the adhesive 120.

### Assembling of decorative part (S400)

In this operation, the decorative part (e.g., a decorative ring, etc.) is assembled to the fingerprint recognition home key prepared through bonding of the external member. In particular, this operation provides a suitable height difference between the decorative part and the external member 130 corresponding to a touch portion for fingerprint recognition.

In more detail, referring to S400 of Fig. 4, the decorative part 200 having a ring shape and assembled along an edge of the external member 130 protrudes to have a predetermined height difference from the upper side of the external member.

Here, the height difference t between the decorative part and the upper side of the external member may range from 30 µm to 150 µm.

The upper limit and the lower limit of the height difference t are obtained from results showing a fingerprint recognition rate of 90% or more upon repeated testing.

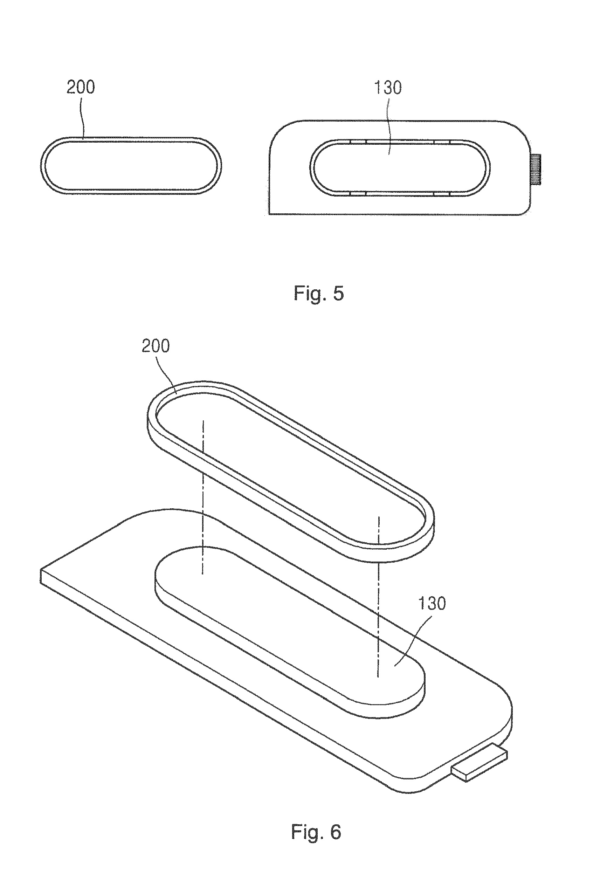

As shown in Fig. 5, the home key to which the external member 130 is bonded, and the decorative part 200 to be assembled to the home key were prepared.

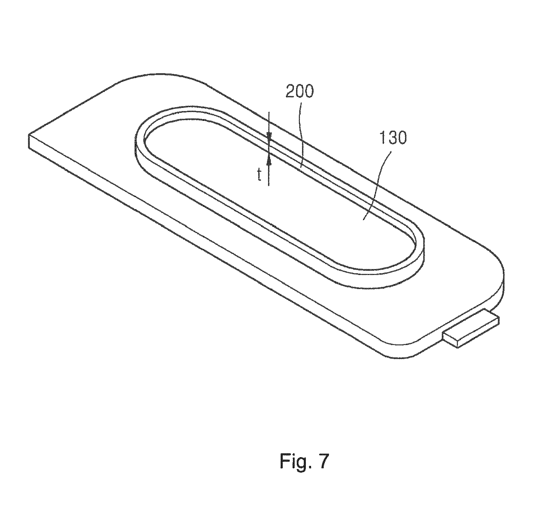

Fig. 6 shows a state before the decorative part 200 and the home key bonded to the external member 130 are assembled, and Fig. 7 shows a state after assembly.

As described above, referring to Fig. 7, a predetermined height difference t is formed between the decorative part 200 assembled along the edge of the external member 130 and the upper side of the external member 130.

A test was performed to compare the fingerprint recognition rates between examples where the height difference t is within the foregoing range (e.g., t is 30 µm, 60 µm, 90 µm, 120 µm and 150 µm) and comparative examples where the height difference t deviates from the foregoing range (e.g., t is 10 µm, 15 µm, 165 µm and 175 µm).

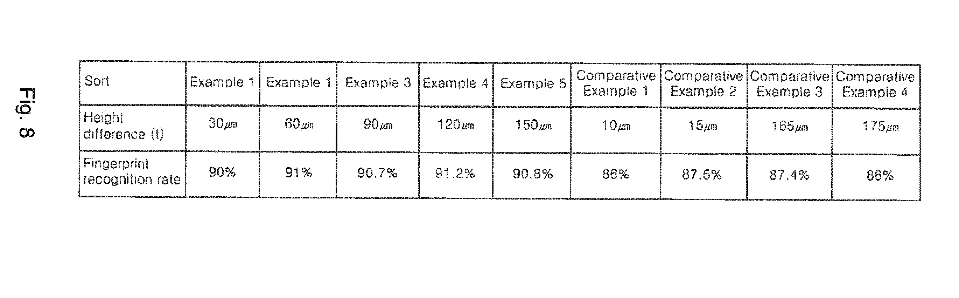

Test results are shown in the table of Fig. 8.

As shown in Fig. 8, all of Examples 1 to 5 wherein the height difference t is within the range from 30 µm to 150 µm provided a fingerprint recognition rate of 90% or more.

On the contrary, Comparative Examples 1 to 4 wherein the height difference t deviates from the range provided a fingerprint recognition rate of less than 90%.

In Examples 1 to 5 and Comparative Examples 1 to 4, the fingerprint recognition home keys employed the fingerprint recognition sensors under the same conditions and had the same structure to which the external member is bonded, but differed in terms of height t between the decorative part 200 and the external member.

Consequently, as a condition for securing the fingerprint recognition rate of the fingerprint recognition home key, it is desirable that the height difference of the decorative part be within the range from 30 µm to 150 µm.

As described above, according to one embodiment of the invention, the method may be used to manufacture a home key that can be received in a portable device and has a function of recognizing a user fingerprint.

In particular, a decorative part to be assembled to an exterior surface of the fingerprint recognition home key is formed to have an offset structure within a preset height difference range with respect to a fingerprint touch portion, thereby improving the fingerprint recognition rate up to 90% or more.

In addition, with the offset structure of the decorative part, the external member having a high dielectric constant is bonded to the film of the fingerprint recognition sensor instead of performing many coating processes, such as primer and shielding, painting, urethane and UV coating, improving the fingerprint recognition rate up to 90% or more.

As such, there are provided a method of manufacturing a fingerprint recognition home key having an offset structure of a decorative part and the structure of the fingerprint recognition home key thereof.

Although some embodiments have been provided to illustrate the present invention, it will be apparent to those skilled in the art that the embodiments are given by way of illustration, and that various modifications and equivalent embodiments can be made without departing from the spirit and scope of the present invention. Accordingly, the scope of the present invention should be limited only by the accompanying claims and equivalents thereof.

## Claims

1. A method of manufacturing a fingerprint recognition home key having an offset structure of a decorative part, comprising:
(a) preparing an injection molded product having a shape of a home key and provided with a fingerprint recognition sensor;
(b) applying a bonding material or an adhesive to an upper side of a film of the fingerprint recognition sensor;
(c) bonding an external member to the upper side of the film of the fingerprint recognition sensor to which the bonding material or the adhesive is applied; and
(d) assembling the decorative part to have a height difference from the external member.

2. The method according to claim 1, wherein the height difference between the external member and the decorative part ranges from 30 µm to 150 µm.

3. The method according to claim 1, wherein the applying a bonding material or an adhesive comprises applying the bonding material or the adhesive to the upper side of the film of the fingerprint recognition sensor, or attaching a double-sided tape thereto.

4. The method according to claim 1, wherein the external member comprises general glass or tempered glass.

5. The method according to claim 1, wherein the external member comprises general glass or tempered glass having a thickness of 40 µm to 100 µm.

6. The method according to claim 1, wherein the external member comprises sapphire glass.

7. The method according to claim 1, wherein the external member comprises sapphire glass having a thickness of 70 µm to 140 µm.

8. The method according to claim 1, wherein the external member comprises a plastic film or an injection molded thin film.

9. The method according to claim 1, wherein the external member comprises a plastic film or an injection molded thin film having a thickness of 30 µm to 130 µm.

10. The method according to claim 1, wherein the bonding an external member to the upper side of the film of the fingerprint recognition sensor comprises:
(c-1) preparing the external member; and
(c-2) printing a selected color at least once on a deposited portion of the rear side of the external member before bonding the external member to the upper side of the film of the fingerprint recognition sensor.

11. The method according to claim 10, wherein the selected color is printed at least once on the deposited portion of the rear side of the external member, and the deposition and color print layer has a thickness of 2 µm to 30 µm.

12. A structure of a fingerprint recognition home key, wherein a decorative part is assembled along an edge of an external member placed on an upper side of a film of a fingerprint recognition sensor to protrude upward within a height difference range of 30 µm to 150 µm from the external member.
